# EUROPEAN PATENT APPLICATION

(11) **EP 3 533 620 A1**
(43) Date of publication of application: **04.09.2019**
(21) Application number: 19159644.4
(22) Date of filing: 27.02.2019
(51) Int. Cl.: B60B 3/16, B60B 29/00

(54) **APPARATUS FOR MOUNTING A MOTOR VEHICLE WHEEL ON THE CORRESPONDING HUB**

(30) Priority: 02.03.2018 DE 202018101170 U
(71) Applicant: Govoni S.r.l., 40014 Crevalcore (BO) (IT)
(72) Inventor: GERADEHAND, Christian, 04109 LEIPZIG (DE); VERRILLO, Davide, 41051 CASTELNUOVO RANGONE MO (IT)
(74) Representative: Modiano, Micaela Nadia

(57) **Abstract**

An apparatus (1) for mounting a motor vehicle wheel on the corresponding hub, the wheel being of the type that comprises a tire associated with a rim provided with a flange for connection to the corresponding hub by means of a plurality of threaded elements, each of which is inserted through a slot formed in the flange and is engaged in a corresponding threaded hole formed in the hub until it abuts, with the corresponding head, against the flange. The apparatus comprises at least one stem (2) which has a first end (3) provided with rigid and temporary connection means (4) which can be associated with one of the threaded holes. The at least one stem (2) is associated with the hub by means of the rigid and temporary connection means (4) engaged in a corresponding threaded hole, and is adapted to act as a support and guide for the positioning of the wheel with respect to the hub.

## Description

The present invention relates to an apparatus for mounting a motor vehicle wheel on the corresponding hub.

Motor vehicle wheels are typically constituted by a tire fitted on a metal rim provided with a central flange for connection to the corresponding hub by means of a plurality of screws, each of which is inserted through a slot formed on the flange of the rim and is screwed in a threaded hole provided in the hub until it abuts with the corresponding head against said flange.

In order to perform reliable and safe wheel mounting it is fundamental to place the screws correctly and screw them into the corresponding holes with an adequate locking torque.

It should also be considered that particularly during the execution of wheel replacement operations performed in a car repair shop, motor vehicles are generally loaded onto auto lifts and therefore the operators have to lift the wheels to a certain height from the ground in order to be able to mount them on the hubs.

In order to avoid lifting the wheel manually, which is awkward owing to its weight and bulk, requires the cooperation of at least two people and does not allow to ensure their correct placement, wheel lifting apparatuses are known which essentially consist of a wheel support which is associated, so that it can move by translation, with a vertical post by means of actuation devices of a hydraulic or pneumatic type. These apparatuses allow to arrange the wheel at a height that corresponds to the height of the hub and to keep it in position during the fixing of the screws, so that the operator can work with both hands free in order to perform correct screw tightening.

However, these lifting apparatuses of a known type are not free from drawbacks, which include the fact that they are rather bulky both to use and to store when they are not being used.

Furthermore, the use of these apparatuses entails an extension of the execution times of the wheel replacement intervention, since the operator has to retrieve the apparatus, which might not be immediately available in the vicinity of his work station, place the wheel on the support, and operate the lifting thereof, proceeding by trial and error to find the correct position with respect to the hub.

Moreover, these apparatuses are also rather expensive, and therefore their use is limited to professional operators. For the same reason, moreover, in car repair shops with multiple work stations it is unlikely that a lifting apparatus is purchased for each station and therefore intervention times can be extended further in order to wait for the apparatus in use at a different station to become available again.

The aim of the present invention is to eliminate the drawbacks noted above of the background art by providing an apparatus for mounting a motor vehicle wheel on the corresponding hub that has a small bulk, can be easily placed in the vicinity of work stations and can be used even in tight spaces.

Within this aim, an object of the present invention is to provide an apparatus that makes it possible to reduce considerably the execution times of the mounting of a wheel, without requiring particular setups and allowing to perform immediately a correct placement of said wheel with respect to the hub.

Another object of the present invention is to provide an apparatus that is easy to use, even for operators who are not particularly expert, allowing to perform reliable and safe mounting of the wheel on the corresponding hub.

Another object is to provide an apparatus that has a low cost, thus facilitating the purchase of an adequate number thereof at specialized car repair shops and optionally even by private users.

A further object of the present invention is to provide an apparatus that is flexible and versatile in use, being able to adapt easily to different wheel and hub models.

Another object of the present invention is to provide an apparatus that has a structure that is simple, relatively easy to provide in practice, safe in use, effective in operation, and has a relatively low cost.

This aim and these objects are all achieved by the present apparatus for mounting a motor vehicle wheel on the corresponding hub, the wheel being of the type that comprises a tire associated with a rim provided with a flange for connection to the corresponding hub by means of a plurality of threaded elements, each of which is inserted through a slot formed in the flange and is engaged in a corresponding threaded hole formed in the hub until it abuts, with the corresponding head, against said flange, characterized in that it comprises at least one stem which has a first end provided with rigid and temporary connection means which can be associated with one of said threaded holes, the at least one stem associated with the hub by means of the rigid and temporary connection means engaged in a corresponding threaded hole being adapted to act as a support and guide for the positioning of the wheel with respect to said hub, the wheel being associable by sliding along the stem inserted through a slot of the corresponding flange.

Further characteristics and advantages of the present invention will become better apparent from the detailed description of a preferred but not exclusive embodiment of an apparatus for mounting a motor vehicle wheel on its hub, illustrated by way of non-limiting example in the accompanying drawings, wherein:

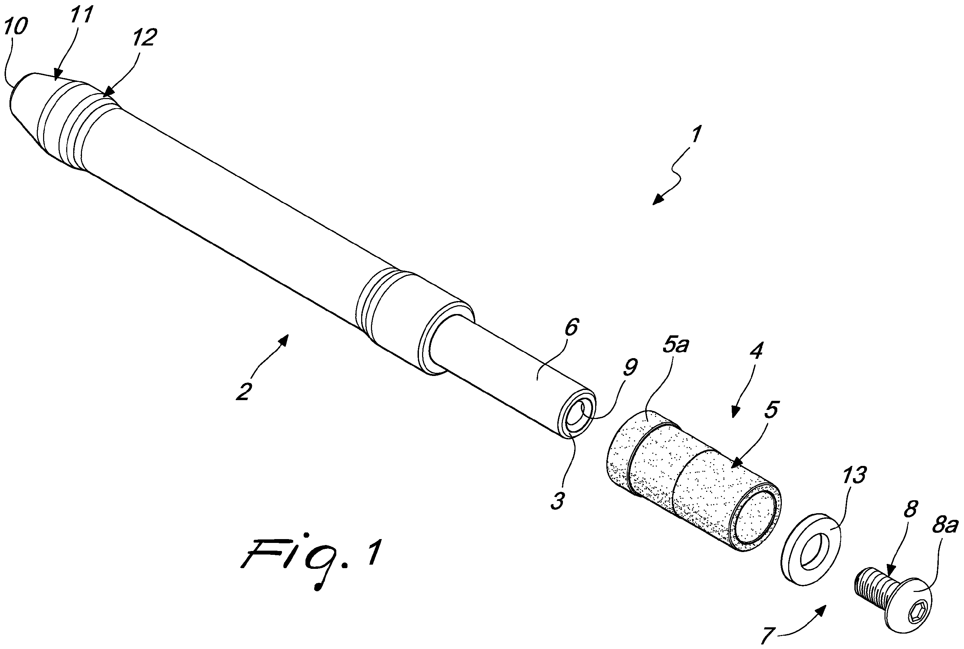

Figure 1 is an exploded perspective view of an apparatus for mounting a motor vehicle wheel on the corresponding hub, according to the invention;
Figure 2 is a front view of the apparatus according to the invention;
Figure 3 is a sectional view, taken along the plane III-III of Figure 2;
Figures 4 and 5 are respective sectional views of the apparatus according to the invention at the first end of the stem coupled to different bushes;
Figure 6 is a perspective view of the step for the setup of the apparatus according to the invention prior to insertion in the corresponding hole on the hub for the mounting of a wheel;
Figure 7 is a perspective view of the apparatus according to the invention inserted in one of the holes on the hub for the mounting of a wheel;
Figure 8 is a perspective view of the apparatus according to the invention during the mounting of a wheel on the hub and the tightening of the screws in the free holes of the hub;
Figure 9 is a perspective view of the final step of the mounting of a wheel on the hub with the apparatus according to the invention, prior to the extraction of said apparatus.

With reference to the figures, the reference numeral 1 generally designates an apparatus for mounting a wheel 100 of a motor vehicle on the corresponding hub 101.

The wheel 100 is of a conventional type and essentially comprises a tire 102 which is fitted on a rim 103 provided with a central flange 104 for connection to the hub 101 by means of a plurality of threaded elements 105, of the type of screws with a corresponding contoured head 105a.

Each screw 105 is inserted so that the stem 105b passes through a slot 106 which is formed in the flange 104 and is engaged in a corresponding threaded hole 107 formed on the hub 101 until it abuts, with the corresponding head 105a, against said flange in order to fasten the wheel 100 to the hub 101, which in turn is connected to the axle shaft of the vehicle (not shown).

The number, size and/or distribution of the threaded elements 105 and, therefore, of the slots 106 on the flange 104 and of the corresponding threaded holes 107 on the hub 101 can vary as a function of the vehicle model.

The apparatus 1 also comprises at least one stem 2 which has a first end 3 provided with means 4 for rigid and temporary connection which can be associated with one of the threaded holes 107.

The stem 2 has a rectilinear shape and is made of rigid, preferably metallic material.

The expression "rigid and temporary connection" means a coupling that renders the assembled parts, i.e., the stem 2 and the hub 101, mutually integral and is reversible, i.e., allows disassembly.

In this manner, when the stem 2 is associated with the hub 101 by virtue of the connection means 4 engaged in one of the holes 107 it is arranged at right angles to the plane of arrangement of the wheel 100 and can act as a support and guide for the positioning of the wheel 100 with respect to the hub 101 and the mounting thereof, to be then removed.

The wheel 100 is in fact made to slide along the stem 2, which is inserted so as to pass through a slot 106 of the flange 104, until it is arranged fully adjacent to the hub 101. In this position, the hub 101 is accommodated in the internal part of the rim 103, so that the wheel 100 is supported by the hub 101 and rotations of the wheel 100 about the stem 2 are avoided. In this manner, each slot 106 is positioned stably and correctly so that it faces a corresponding hole 107 for the insertion and tightening of a respective screw 105.

In greater detail, the connection means 4 comprise at least one bush 5 made of elastically deformable material which is associated with the stem 2 at the first end 3.

The bush 5 is coaxial to the stem 2, so as to allow a correct positioning of said stem with respect to the wheel 100.

The outside diameter of the bush 5 is greater than the diameter of the hole 107 at which it must be inserted along at least one portion of its longitudinal extension, so as to obtain a reversible interlocking of the bush 5 along said hole by means of the manual forcing of the bush 5 inside it.

The bush 5 can be made for example of polymeric material such as Delrin.

In the present description, the term "diameter" is used to indicate the maximum dimension of the transverse cross-section of a component, even if said cross-section has a noncircular shape.

Preferably, the bush 5 has an outside diameter that increases along its longitudinal extension away from the first end 3 of the stem 2, and can also have an outside diameter that is smaller than the diameter of the hole 107 proximate to said first end.

In this manner it is possible to facilitate the insertion of the bush 5 in the corresponding hole 107 by gradual forcing.

In the embodiment shown, the outer surface of the bush 5 has a step-like shape, with an outside diameter that increases in the direction away from the first end 3 of the stem 2.

Furthermore, the bush 5 is provided with an annular protrusion 5a which forms an abutment shoulder on the hub 101, in order to limit the insertion of the stem 2 in the corresponding hole 107.

However, it is not excluded that the bush 5 might have a frustum-like shape with a continuous diameter variation along its longitudinal extension, or that it may have one or more annular protrusions distributed along its longitudinal extension.

Preferably, the bush 5 is detachably associated with the stem 2.

The stem 2 is provided with a terminal pin 6 at the first end 3, along which the bush 5 is fitted and which is associated with means 7 for retention in a longitudinal direction of said bush.

The retention means 7 are preferably associated detachably with the pin 6.

In this case, the retention means 7 comprise a threaded element 8, such as a screw or the like, which is engaged in a corresponding axial hole 9 formed along the pin 6 and the first end 3 and which has the corresponding head 8a, or a washer 13 clamped between said head and the pin 6, which protrudes radially from said pin in order to form an abutment shoulder of the bush 5 in an axial direction.

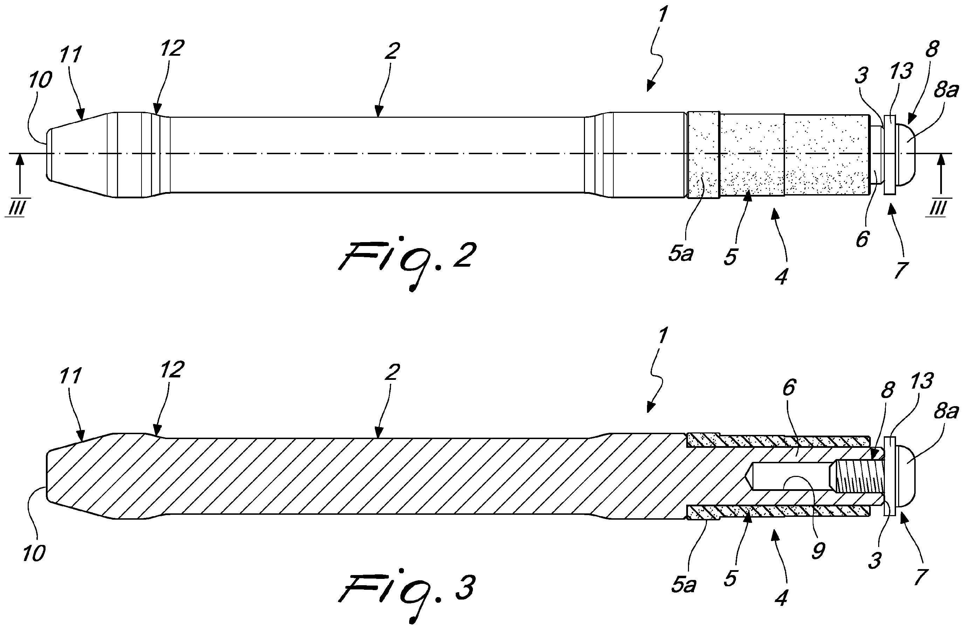

The pin 6 has a greater longitudinal extension than the bush 5, so as to define an axial play between the two elements (Figures 3-5).

Therefore, the bush 5 can slide by an extent that is equal to said axial play with respect to the pin 6 in addition to rotating about it.

These degrees of freedom facilitate the step of extraction of the bush 5 from the hole 107, since they facilitate the transmission of forces to the bush 5 in order to remove it from the corresponding hole 107.

Usefully, if the bush 5 and the retention means 7 are associated detachably with the pin 6, the apparatus 1 can have two or more bushes 5 having a different shape and external diameter size which can be coupled alternately to the stem 2 in order to be used in the mounting of wheels 100 having a different shape on hubs 101 that have holes 107 of different diameter.

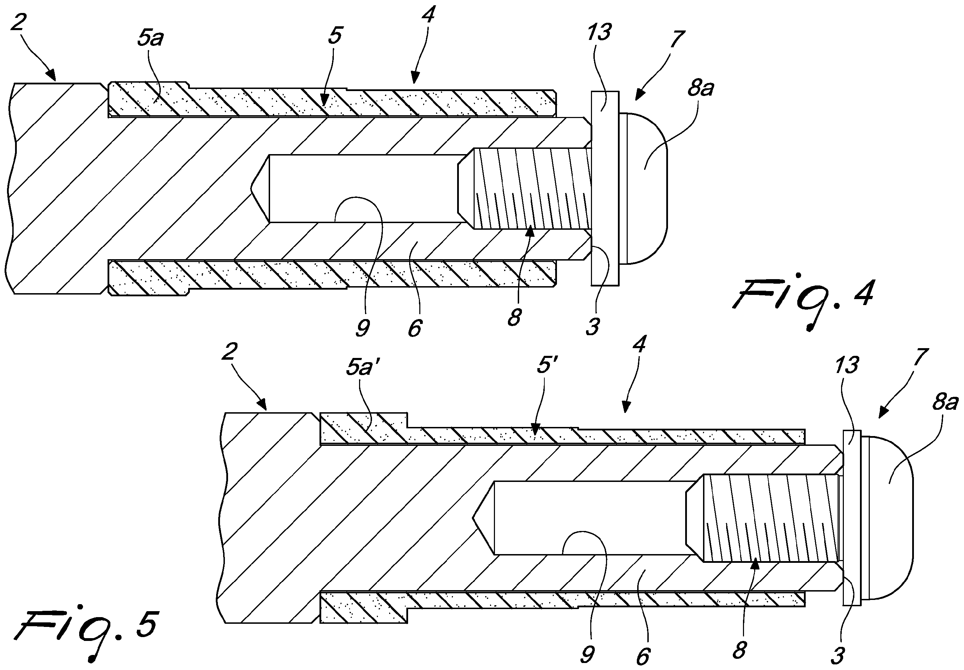

For example, Figures 4 and 5 show the terminal portion of the stem 2 at the first end 3 coupled to two different bushes 5 and 5' which have a different shape and dimension of the outside diameter, with corresponding protrusions 5a and 5a'.

In this manner, the versatility of the apparatus 1 is increased, and the apparatus can be used to mount wheels 100 of different vehicle models.

Furthermore, in case of damage, the bush 5 can be replaced while reusing the stem 2 and therefore with reduced costs for the operators.

It is not excluded in any case that an irreversible connection of the bush 5 to the stem 2 might be provided.

The stem 2 has a second end 10, on the opposite side with respect to the first end 3, at which there is a guiding section 11 that has a diameter that decreases toward said second end in order to facilitate the insertion of the stem 2 through the slot 106 of the flange 104 during the mounting of the wheel 100.

Furthermore, proximate to the second end 10, the stem 2 comprises a grip section 12 the outside diameter of which increases toward said second end in order to facilitate the extraction of the stem 2 from the corresponding hole 107 on the hub 101, once mounting of the wheel 100 has ended.

If both are provided, the grip section 12 is arranged downstream of the guiding section 11 along the longitudinal extension of the stem 2 away from the second end 10.

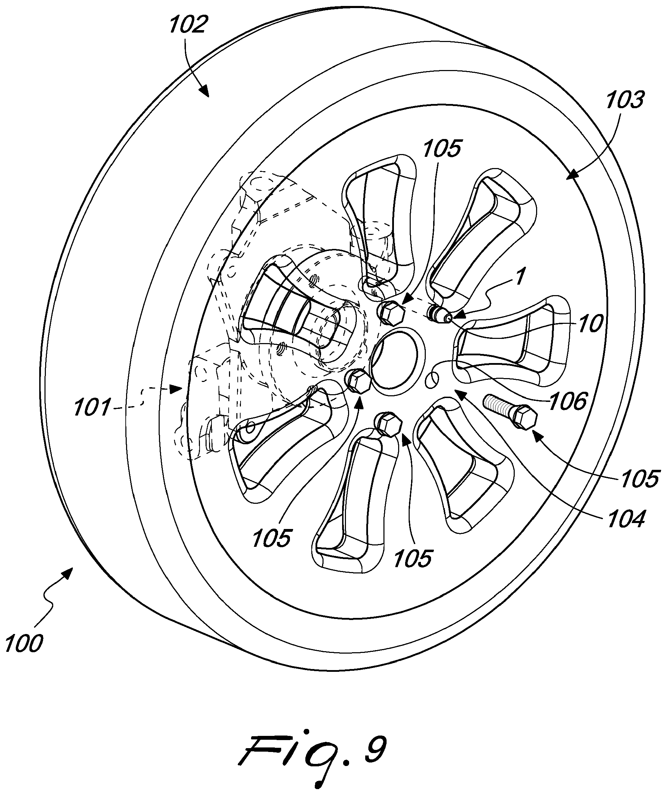

The stem 2 has such a longitudinal extension that the second end 10 protrudes from the flange 104 when the wheel 100 is adjacent to the hub 101, so as to allow its extraction (Figure 9).

In particular, the grip section 12 must protrude, or at least be accessible from the outside, in order to allow to grip the stem 2 and extract it.

In any case, it is not excluded that only one of the two sections 11 or 12 might be provided.

Furthermore, the apparatus 1 can have two stems 2 provided with corresponding connection means 4 which can be associated in respective holes 107 of the hub 101, if the wheel 100 is particularly heavy or one wishes to achieve a better reference for its positioning with respect to the hub 101.

The operation of the present invention is as follows.

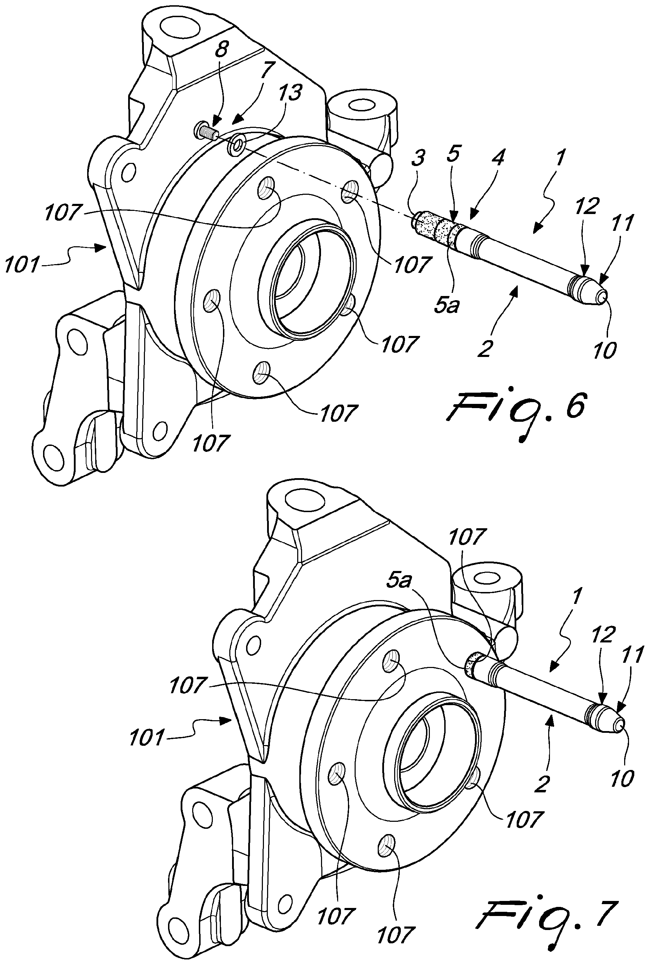

After mounting the appropriate bush 5 on the pin 6, on the basis of the size of the holes 107 of the hub 101, the screw 8 is tightened in the corresponding hole 9 (Figure 6).

The apparatus 1 is then mounted on the hub 101, forcing the bush 5 inside one of the holes 107 (Figure 7).

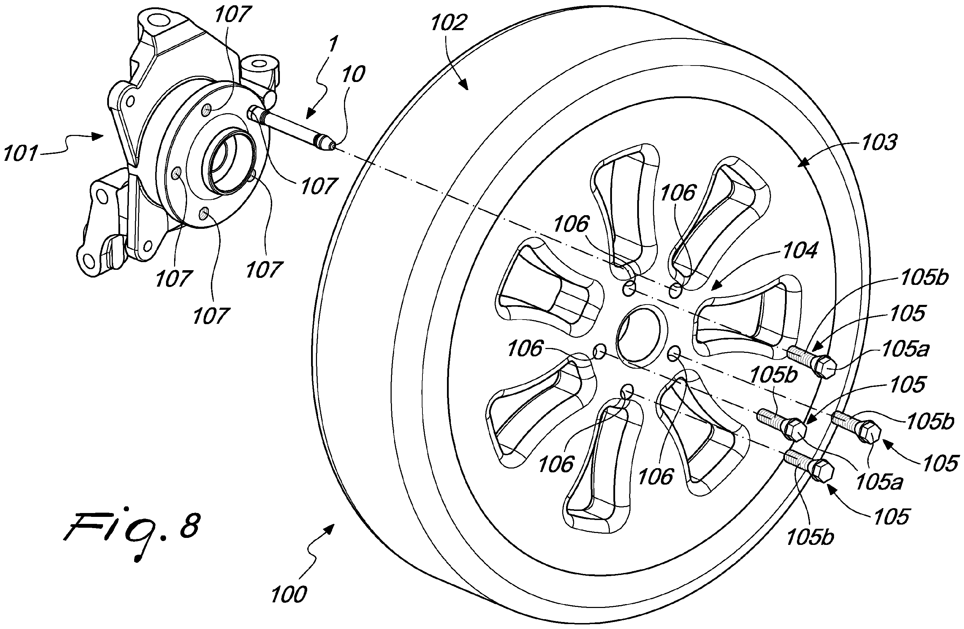

The wheel 100 is then rested on the stem 2, which is inserted through one of the slots 106 of the corresponding flange 104, and is made to slide along said stem until it is completely adjacent to the hub 101, with the corresponding slots 106 facing corresponding holes 107 (Figure 8).

In this condition, the screws 105 can be engaged in the free holes 107 (Figure 9), so as to connect at least partially the wheel 100 to the hub 101, in order to then extract the apparatus 1 from the corresponding hole 107 and screw therein the last screw 105.

In practice it has been found that the described invention achieves the proposed aim and objects and in particular the fact is stressed that the apparatus according to the invention has an absolutely low bulk and can be used easily even in tight spaces and facilitating its placement when not in use.

Moreover, the apparatus according to the invention is easy to use and allows to reduce intervention times, ensuring in any case that it is possible to perform a reliable and safe mounting of motor vehicle wheels.

Furthermore, the apparatus according to the invention has low purchase and maintenance costs, thus facilitating the purchase of an adequate number thereof in professional car repair shops and even by private users.

The invention thus conceived is susceptible of numerous modifications and variations, all of which are within the scope of the appended claims.

All the details may furthermore be replaced with other technically equivalent elements.

In practice, the materials used, as well as the contingent shapes and dimensions, may be any according to the requirements without thereby abandoning the protective scope of the claims that follow.

The disclosures in German Utility Model Application No. 20 2018 101 170.7 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (1) for mounting a motor vehicle wheel (100) on the corresponding hub (101), the wheel (100) being of the type that comprises a tire (102) associated with a rim (103) provided with a flange (104) for connection to the corresponding hub (101) by means of a plurality of threaded elements (105), each of which is inserted through a slot (106) formed in the flange (104) and is engaged in a corresponding threaded hole (107) formed in the hub (101) until it abuts, with the corresponding head (105a), against said flange, **characterized in that** it comprises at least one stem (2) which has a first end (3) provided with rigid and temporary connection means (4) which can be associated with one of said threaded holes (107), the at least one stem (2) associated with the hub (101) by means of the rigid and temporary connection means (4) engaged in a corresponding threaded hole (107) being adapted to act as a support and guide for the positioning of the wheel (100) with respect to said hub, the wheel (100) being associable by sliding along the stem (2) inserted through a slot (106) of the corresponding flange (104).

2. The apparatus (1) according to claim 1, **characterized in that** said connection means (4) comprise at least one bush (5) made of elastically deformable material which is associated with said stem (2) at said first end (3), the outside diameter of the bush (5) being greater than the diameter of the corresponding threaded hole (107) at least along a portion of its longitudinal extension so as to obtain a reversible interlocking of the bush (5) along said hole.

3. The apparatus (1) according to claim 2, **characterized in that** said at least one bush (5) has an outside diameter that increases along its longitudinal extension away from the first end (3) of said stem (2).

4. The apparatus (1) according to claim 3, **characterized in that** the outer surface of said at least one bush (5) has a step-like shape with an outside diameter that increases away from the first end (3) of said stem (2).

5. The apparatus (1) according to one or more of claims 2-4, **characterized in that** said at least one bush (5) is associated detachably with said stem (2).

6. The apparatus (1) according to claim 2, **characterized in that** said stem (2) comprises a terminal pin (6) at said first end (3), along which said at least one bush (5) is fitted and which is associated with means (7) for retention of said bush in a longitudinal direction.

7. The apparatus (1) according to claim 6, **characterized in that** said retention means (7) are associated detachably with said pin (6).

8. The apparatus (1) according to claim 6, **characterized in that** said pin (6) has a greater longitudinal extension than said at least one bush (5).

9. The apparatus (1) according to claims 5 and 7, **characterized in that** it comprises at least two of said bushes (5, 5') which are alternately associable with said pin (6).

10. The apparatus (1) according to claim 1, **characterized in that** said stem (2) comprises a guiding section (11) at the second end (10), which is arranged opposite the first end (3), having a diameter that decreases in the direction toward said second end.

11. The apparatus (1) according to claim 1, **characterized in that** said stem (2) comprises a grip section (12) proximate to the second end (10), which is opposite with respect to the first end (3), with an outside diameter that increases toward said second end.

12. The apparatus (1) according to claim 1, **characterized in that** said stem (2) has such a longitudinal extension as to have the second end (10), arranged opposite the first end (3), that protrudes from the flange (104) when the wheel (100) is arranged adjacent to the hub (101).

13. The apparatus (1) according to one or more of the preceding claims, **characterized in that** it comprises two of said stems (2) provided with corresponding connection means (4) which can be associated in respective threaded holes (107) of said hub (101).
